# EUROPEAN PATENT APPLICATION

(11) **EP 4 586 668 A1**
(43) Date of publication of application: **16.07.2025**
(21) Application number: 23884916.0
(22) Date of filing: 31.10.2023
(51) Int. Cl.: H04W 24/02, H04W 76/27

(54) **COMMUNICATION METHOD AND APPARATUS**

(30) Priority: 03.11.2022 CN 202211369927; 21.11.2022 CN 202211455033
(71) Applicant: Huawei Technologies Co., Ltd., Shenzhen, Guangdong 518129 (CN)
(72) Inventor: ZHANG, Mengchen, Shenzhen, Guangdong 518129 (CN); XU, Haibo, Shenzhen, Guangdong 518129 (CN); AHLUWALIA, Jagdeep Singh, Shenzhen, Guangdong 518129 (CN)
(74) Representative: Epping - Hermann - Fischer
(86) International application number: PCT/CN2023/128321
(87) International publication number: WO 2024/093986

(57) **Abstract**

This application relates to a communication method and apparatus. A terminal device receives a paging message from a network device, where the paging message is used to page the terminal device to receive downlink small data. When one or more of the following items are met, the terminal device initiates an RRC connection resume procedure used for small packet transmission: The paging message that carries first indication information is received, where the first indication information indicates downlink small packet transmission, first configuration information is received from the network device, where the first configuration information indicates a first downlink small packet transmission configuration; a second downlink small packet transmission configuration is received from the network device; or there is no to-be-processed or to-be-sent uplink data or no to-be-processed or to-be-sent uplink non-small data. In embodiments of this application, a downlink small packet transmission determining process is added for the terminal device. In this process, a probability that a terminal device that does not meet a condition initiates an RRC connection resume procedure used for small packet transmission can be reduced, and power consumption of the terminal device can be reduced.

## Description

### CROSS-REFERENCE TO RELATED APPLICATIONS

This application claims priority to Chinese Patent Application No. 202211369927.3, filed with the China National Intellectual Property Administration on November 3, 2022 and entitled "DOWNLINK SMALL PACKET CONFIGURATION METHOD", which is incorporated herein by reference in its entirety. This application claims priority to Chinese Patent Application No. 202211455033.6, filed with the China National Intellectual Property Administration on November 21, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In some scenarios, a user equipment (user equipment, UE) in a radio resource control (radio resource control, RRC) non-connected state needs to perform transmission of a data packet that is usually very small, that is, the UE needs to perform transmission of only small data (small data). However, it is currently specified that the UE can perform transmission of data only after entering an RRC connected (connected) state. Therefore, when the UE needs to perform transmission of only the small data, signaling overheads needed by the UE to enter the RRC connected state from the RRC non-connected state may even be greater than transmission overheads of the small data. This causes unnecessary power consumption and signaling overheads. Therefore, currently, a small packet transmission procedure is introduced, to support the UE in directly performing transmission of the small data without entering the RRC connected state.

The small packet transmission procedure includes an uplink small packet transmission procedure and a downlink small packet transmission procedure. In the downlink small packet transmission procedure, a base station may page the UE. After receiving the paging, the UE may initiate the downlink small packet transmission procedure to receive downlink small data. However, some UEs may not have a condition for receiving the downlink small data. According to the current downlink small packet transmission procedure, these UEs may fail to receive the downlink small data.

### SUMMARY

Embodiments of this application provide a communication method and apparatus, to improve a success rate of receiving downlink small data by a terminal device.

According to a first aspect, a first communication method is provided. The method may be performed by a terminal device, may be performed by another device that includes a function of a terminal device, or may be performed by a chip system (or a chip) or another functional module. The chip system or the functional module can implement the function of the terminal device. The chip system or the functional module is, for example, disposed in the terminal device. The method includes: receiving a paging message from a network device, where the paging message is used to page the terminal device to receive downlink small data; and when one or more of the following items are met, initiating an RRC connection resume procedure used for small packet transmission: the paging message that carries first indication information is received, where the first indication information indicates downlink small packet transmission; first configuration information is received from the network device, where the first configuration information indicates a first downlink small packet transmission configuration; a second downlink small packet transmission configuration is received from the network device; or there is no to-be-processed or to-be-sent uplink data or no to-be-processed or to-be-sent uplink non-small data.

In this embodiment of this application, if the terminal device receives the paging message indicating the downlink small data, the terminal device may determine, based on a corresponding condition, to initiate the RRC connection resume procedure used for the small packet transmission. Alternatively, it may be understood as that the terminal device may determine, based on a corresponding condition, whether to initiate the RRC connection resume procedure used for the small packet transmission. For example, if one or more of the foregoing items are met, the terminal device may initiate the RRC connection resume procedure used for the small packet transmission. If one or more of the foregoing items are not met, the terminal device may not initiate the RRC connection resume procedure used for the small packet transmission. In the determining process, a probability that a terminal device that does not meet the condition initiates an RRC connection resume procedure used for small packet transmission can be reduced, and power consumption of this type of terminal device can be reduced. In addition, a terminal device that determines to initiate an RRC connection resume procedure used for small packet transmission is enabled as much as possible to be a device that meets the initiation condition, so that a success rate of receiving downlink small data by the terminal device can be improved. Optionally, that the terminal device initiates the RRC connection resume procedure used for the small packet transmission may include: The terminal device initiates an RRC connection resume procedure used for the downlink small packet transmission.

In an optional implementation, the initiating an RRC connection resume procedure used for small packet transmission includes: initiating the RRC connection resume procedure used for the downlink small packet transmission.

In an optional implementation, the first configuration information is included in a system message. The network device may send the first configuration information in a broadcast manner or a unicast manner. If the first configuration information is sent in the broadcast manner, the first configuration information may be included in the system message (for example, a SIB1), or may be included in another broadcast message. The first configuration information is sent in the broadcast manner, so that sending overheads can be reduced.

In an optional implementation, the first configuration information and SDT common configuration information are different information. The SDT common configuration information may be used by the terminal device to determine whether to initiate an RRC connection resume process used for uplink small packet transmission. The two pieces of information are different information, so that the network device can separately support the uplink small packet transmission or the downlink small packet transmission, and does not need to support both the two transmission procedures. This can simplify implementation of the network device.

In an optional implementation, the first configuration information includes information about a first timer and/or a signal quality threshold corresponding to the small packet transmission, where the first timer is configured to monitor a small packet transmission process. The signal quality threshold corresponding to the small packet transmission may be used by the terminal device to determine whether to initiate the RRC connection resume procedure used for the small packet transmission (for example, the downlink small data transmission). Optionally, the first timer and a timer t319a included in the SDT common configuration information may be a same timer, or may be different timers. If the first timer and the timer t319a are different timers, timing duration may be equal or unequal. The signal quality threshold may be equal to or unequal to an RSRP threshold included in the SDT common configuration information. The first configuration information may indicate a configuration used for the downlink small packet transmission and/or a configuration used for the uplink small packet transmission.

In an optional implementation, the first timer is configured to monitor a downlink small packet transmission process, and the signal quality threshold corresponding to the small packet transmission is a signal quality threshold corresponding to the downlink small packet transmission. The first configuration information may be used for the downlink small packet transmission, so that the configuration information is more targeted.

In an optional implementation, the initiating an RRC connection resume procedure used for small packet transmission includes: sending an RRC resume request message to the network device, and starting the first timer. The method further includes: when an RRC response message is received from the network device, if the first timer is in a running state, stopping the first timer; or if the first timer expires, entering an RRC idle state. If the terminal device obtains a configuration of the first timer (for example, the first configuration information includes the information about the first timer), the terminal device may start the first timer when initiating the RRC connection resume procedure used for the small packet transmission, to monitor the downlink small packet transmission procedure.

In an optional implementation, after the initiating an RRC connection resume procedure used for small packet transmission, the method further includes: receiving first downlink small data from the network device.

In an optional implementation, the second downlink small packet transmission configuration includes a configuration of a radio bearer that supports the downlink small packet transmission, and/or a configuration of a preconfigured resource that supports the downlink small packet transmission. For example, the second downlink small packet transmission configuration may be sent by the network device by using an RRC message or another unicast message, is separately configured by the network device for the terminal device, and is a dedicated configuration of the terminal device. The first downlink small packet configuration may be sent by the network device by using a broadcast message (for example, a system message), is a common configuration, and may be used by a plurality of terminal devices (for example, some or all terminal devices that can receive the broadcast message).

According to a second aspect, a second communication method is provided. The method may be performed by a network device, may be performed by another device that includes a function of a network device, or may be performed by a chip system (or a chip) or another functional module. The chip system or the functional module can implement the function of the network device. The chip system or the functional module is, for example, disposed in the network device. Optionally, the network device is a core network device, for example, an AMF or a UPF. Alternatively, the network device may be an access network device, for example, a base station, a transmission point (transmission point, TP), a transmission reception point (transmission reception point, TRP), or a reception point (reception point, RP). In embodiments of this application, concepts such as a base station, a TP, a TRP, an RP, and a cell (cell) may be replaced with each other. The method includes: sending first configuration information, where the first configuration information indicates a first downlink small packet transmission configuration, the first configuration information and SDT common configuration information are different information, and an SDT common configuration is used for uplink small packet transmission.

In an optional implementation, the first configuration information is included in a system message.

In an optional implementation, the first configuration information includes information about a first timer and/or a signal quality threshold corresponding to small packet transmission, where the first timer is configured to monitor a small packet transmission process.

In an optional implementation, the first timer is configured to monitor a downlink small packet transmission process, and the signal quality threshold corresponding to the small packet transmission is a signal quality threshold corresponding to downlink small packet transmission.

In an optional implementation, the method further includes: sending a paging message, where the paging message is used to page a terminal device to receive downlink small data; receiving an RRC resume request message from the terminal device; and sending first downlink small data to the terminal device.

For technical effects brought by the second aspect or the various optional implementations of the second aspect, refer to descriptions of the technical effects of the first aspect or the corresponding implementations of the first aspect.

According to a third aspect, a communication apparatus is provided. The communication apparatus may be the terminal device according to either the first aspect or the second aspect. The communication apparatus has a function of the terminal device. For example, the communication apparatus is a terminal device, a large device including a terminal device, or a functional module in a terminal device, for example, a baseband apparatus or a chip system. In an optional implementation, the communication apparatus includes a baseband apparatus and a radio frequency apparatus. In another optional implementation, the communication apparatus includes a processing unit (sometimes referred to as a processing module) and a transceiver unit (sometimes referred to as a transceiver module). The transceiver unit can implement a sending function and a receiving function. When the transceiver unit implements the sending function, the transceiver unit may be referred to as a sending unit (sometimes also referred to as a sending module), or when the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a collective name of these functional modules.

In an optional implementation, the transceiver unit (or the receiving unit) is configured to receive a paging message from a network device, where the paging message is used to page the terminal device to receive downlink small data. The processing unit (or the transceiver unit (for example, the sending unit)) is configured to: when one or more of the following items are met, initiate an RRC connection resume procedure used for small packet transmission: the paging message that carries first indication information is received, where the first indication information indicates downlink small packet transmission; first configuration information is received from the network device, where the first configuration information indicates a first downlink small packet transmission configuration; a second downlink small packet transmission configuration is received from the network device; or there is no to-be-processed or to-be-sent uplink data or no to-be-processed or to-be-sent uplink non-small data.

In an optional implementation, the communication apparatus further includes a storage unit (sometimes also referred to as a storage module), and the processing unit is configured to couple to the storage unit, and execute a program or instructions in the storage unit, to enable the communication apparatus to perform the function of the terminal device according to either the first aspect or the second aspect.

According to a fourth aspect, another communication apparatus is provided. The communication apparatus may be the network device according to either the first aspect or the second aspect. The communication apparatus has a function of the network device. For example, the communication apparatus is a network device, a large device including a network device, or a functional module in a network device, for example, a baseband apparatus or a chip system. In an optional implementation, the communication apparatus includes a baseband apparatus and a radio frequency apparatus. In another optional implementation, the communication apparatus includes a processing unit (sometimes referred to as a processing module) and a transceiver unit (sometimes referred to as a transceiver module). For an implementation of the transceiver unit, refer to descriptions in the third aspect.

In an optional implementation, the transceiver unit (or a sending unit) is configured to send first configuration information, where the first configuration information indicates a first downlink small packet transmission configuration, the first configuration information and SDT common configuration information are different information, and an SDT common configuration is used for uplink small packet transmission.

In an optional implementation, the communication apparatus further includes a storage unit (sometimes also referred to as a storage module), and the processing unit is configured to couple to the storage unit, and execute a program or instructions in the storage unit, to enable the communication apparatus to perform the function of the network device according to either the first aspect or the second aspect.

According to a fifth aspect, a communication apparatus is provided. The communication apparatus may be a terminal device, or may be a chip or a chip system used in a terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device in the foregoing aspects.

According to a sixth aspect, a communication apparatus is provided. The communication apparatus may be a network device, or may be a chip or a chip system used in a network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the network device in the foregoing aspects.

According to a seventh aspect, a communication system is provided, including a terminal device and a network device. The terminal device is configured to perform the method performed by the terminal device according to either the first aspect or the second aspect, and the network device is configured to perform the method performed by the network device according to either the first aspect or the second aspect. For example, the terminal device may be implemented by using the communication apparatus according to the third aspect or the fifth aspect, and the network device may be implemented by using the communication apparatus according to the fourth aspect or the sixth aspect.

According to an eighth aspect, a computer-readable storage medium is provided. The computer-readable storage medium is configured to store a computer program or instructions. When the computer program or instructions are run, the method performed by the terminal device or the network device in the foregoing aspects is implemented.

According to a ninth aspect, a computer program product including instructions is provided. When the instructions are run on a computer, the methods according to the foregoing aspects are implemented.

According to a tenth aspect, a chip system is provided, including a processor and an interface. The processor is configured to invoke instructions from the interface and run the instructions, to enable the chip system to implement the methods according to the foregoing aspects.

### BRIEF DESCRIPTION OF DRAWINGS

FIG. 1 is a diagram of an application scenario according to an embodiment of this application;
FIG. 2 is a flowchart of a communication method according to an embodiment of this application;
FIG. 3 is a diagram of an apparatus according to an embodiment of this application; and
FIG. 4 is a diagram of another apparatus according to an embodiment of this application.

### DESCRIPTION OF EMBODIMENTS

To make objectives, technical solutions and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, an order, a time sequence, priorities, importance degrees, or the like of the plurality of objects. For example, a first radio resource control (radio resource control, RRC) request message and a second RRC request message may be a same message, or may be different messages. In addition, the names do not indicate that the two messages have different content, sizes, application scenarios, transmit ends/receive ends, priorities, importance degrees, or the like. In addition, step numbers in embodiments described in this application are merely used to distinguish between different steps, but are not used to limit a sequence of the steps. For example, S201 may be performed before S202, may be performed after S202, or may be performed simultaneously with S202.

The following describes a part of terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), smart grid (smart grid), smart furniture, smart office, smart wearable, smart transportation, smart city (smart city), uncrewed aerial vehicle, and robot. The terminal device sometimes may be referred to as a UE, a terminal, an access station, a UE station, a remote station, a wireless communication device, a user apparatus, or the like. For ease of description, in embodiments of this application, an example in which the terminal device is a UE is used for description.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequently evolved base station in a 3rd generation partnership project (3rd generation partnership project, 3GPP), an access node, a wireless relay node, or a wireless backhaul node in a wireless fidelity (wireless fidelity, Wi-Fi) system, and the like. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, in a vehicle to everything (vehicle to everything, V2X) technology, the network device may be a road side unit (road side unit, RSU). The following uses an example in which the access network device is a base station for description. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

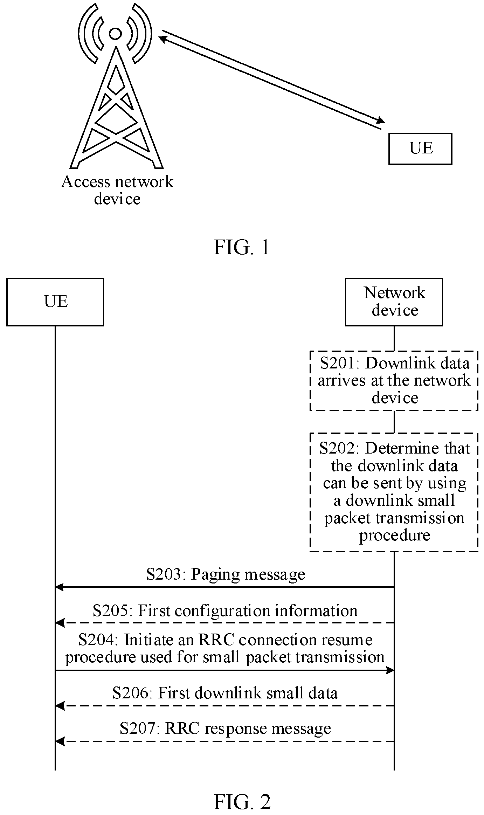

RRC statuses of the UE. Currently, the UE has three RRC statuses in total. The three RRC statuses are respectively an RRC idle (idle) state, an RRC inactive (inactive) state, and an RRC connected state. If the UE has established an RRC connection, the UE is in the RRC connected state or the RRC inactive state. If the UE has not established an RRC connection, the UE is in the RRC idle state. The RRC inactive state is introduced for the UE in 5th generation (5th generation, 5G) mobile communication technology NR. This RRC status is mainly for a case in which "a UE that has infrequent (infrequent) data transmission is usually kept in the RRC inactive state by a network." The UE performs different operations in different RRC statuses. For example, FIG. 1 is a diagram of switching between three RRC statuses. When the UE is in the RRC idle state, if the UE needs to perform data transmission, the UE may initiate an RRC connection establishment process, to enter the RRC connected state. If the UE in the RRC connected state does not need to perform data transmission, the base station may release the UE, so that the UE enters the RRC idle state or the RRC inactive state. If the base station sends a release (release) message that carries a suspension indication, for example, an RRC release message that carries a suspend indication (RRC release with suspend indication), the UE enters the RRC inactive state. If the base station sends a release message, for example, an RRC Release message, the UE enters the RRC idle state. In addition, the UE in the RRC inactive state may further return to the RRC connected state by using an RRC connection resume (resume) process, or the base station may release the UE in the RRC inactive state to the RRC idle state.

It can be learned from the foregoing different RRC statuses that the UE in an RRC non-connected state does not support data transmission. In other words, the UE can perform data transmission only after entering the RRC connected state. However, in some scenarios, the UE in the RRC non-connected state needs to perform transmission of a data packet that is usually very small, that is, the UE needs to perform transmission of only small data (small data), for example, a related service of a smartphone, for example, an instant message, a heartbeat packet, or a push message of some applications (APPs), or a related service of a non-smartphone, for example, periodic data (for example, a heartbeat packet) of a wearable device, or a periodic reading (for example, a reading of a smart meter) sent by an industrial wireless sensor network. In this case, signaling overheads needed by the UE to enter the RRC connected state from the RRC non-connected state may even be greater than transmission overheads of the small data. This causes unnecessary power consumption and signaling overheads. Therefore, a small packet transmission procedure is currently introduced, for example, early data transmission (early data transmission, EDT) in a long term evolution (long term evolution, LTE) system or small data transmission (small data transmission, SDT) in a new radio (new radio, NR) system, both of which support the UE in directly performing transmission of the small data without entering the RRC connected state.

In NR SDT research of a 3rd generation partnership project (3rd generation partnership project, 3GPP), a mobile terminated (mobile terminated, MT)-SDT solution in the RRC inactive state is standardized, and the MT-SDT is actually a downlink small packet transmission solution. The MT-SDT means that when the base station or another network device needs to send downlink small data to the UE, the UE does not need to enter the RRC connected state, and directly receives the downlink data in the RRC inactive state. In an MT-SDT procedure, the base station may page the UE. After receiving the paging, the UE may initiate the RRC connection resume process to receive the downlink small data. However, some UEs may not have a condition for receiving the downlink small data. According to a current downlink small packet transmission procedure, these UEs may fail to receive the downlink small data.

In view of this, the technical solutions of embodiments of this application are provided. In embodiments of this application, if the UE receives a paging message indicating the downlink small data, the UE may determine, based on a corresponding condition, to initiate an RRC connection resume procedure used for small packet transmission. Alternatively, it may be understood as that the UE may determine, based on a corresponding condition, whether to initiate an RRC connection resume procedure used for small packet transmission. For example, if one or more of the foregoing items are met, the UE may initiate the RRC connection resume procedure used for the small packet transmission. If one or more of the foregoing items are not met, the UE may not initiate the RRC connection resume procedure used for the small packet transmission. In the determining process, a probability that a UE that does not meet the condition initiates an RRC connection resume procedure used for small packet transmission can be reduced, and power consumption of this type of UE can be reduced. In addition, a UE that determines to initiate an RRC connection resume procedure used for small packet transmission is enabled as much as possible to be a device that meets the initiation condition, so that a success rate of receiving downlink small data by the UE can be improved. Optionally, that the UE initiates the RRC connection resume procedure used for the small packet transmission may include: The UE initiates an RRC connection resume procedure used for downlink small packet transmission.

The technical solutions provided in embodiments of this application may be applied to a 4th generation (4th generation, 4G) mobile communication technology system, for example, an LTE system, may be applied to a 5G system, for example, an NR system, or may be applied to a next generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to a vehicle to everything (vehicle to everything, V2X) scenario, for example, an NR-V2X scenario. For example, the technical solutions may be applied to an internet of vehicles, for example, V2X or vehicle-to-vehicle (vehicle-to-vehicle, V2V), or may be applied to fields such as intelligent driving, assisted driving, or intelligent connected vehicle.

For example, FIG. 1 shows an architecture of a communication network to which an embodiment of this application is applicable. In FIG. 1, the UE camps on the access network device. In this case, the UE may be in the RRC non-connected state. For more descriptions of the access network device and the UE, refer to the foregoing descriptions.

To better describe embodiments of this application, the following describes a method provided in an embodiment of this application with reference to the accompanying drawings. In embodiments of this application, the RRC non-connected state includes, for example, the RRC inactive state or the RRC idle state. Unless otherwise specified below, in the accompanying drawings corresponding to embodiments of this application, steps represented by dashed lines are all optional steps.

An embodiment of this application provides a communication method. FIG. 2 is a flowchart of the method. The method may be applied to the network architecture shown in FIG. 1. For example, a UE in the method may be the UE in FIG. 1, and a network device in the method may be the access network device in FIG. 1 or a core network device, for example, a UPF or an AMF, that is accessed by the access network device in FIG. 1.

S201: Downlink data arrives at the network device.

If the network device is the core network device, the downlink data may arrive at the core network device. Alternatively, if the network device is the access network device, the downlink data may first arrive at the core network device (for example, the UPF), and the core network device may send the downlink data to the access network device. In this case, the downlink data arrives at the access network device.

S202: The network device determines that the downlink data can be sent by using a downlink small packet transmission procedure. In this embodiment of this application, the downlink small packet transmission procedure is, for example, an MT-SDT procedure, or may be another procedure used for downlink small packet transmission.

The network device may determine, based on a first condition, whether the downlink data can be sent by using the downlink small packet transmission procedure. For example, the first condition includes a threshold condition, and/or includes a load condition of the network device. Alternatively, the first condition may further include another condition. This is not specifically limited.

For example, the first condition includes the threshold condition. The network device may determine whether a data volume of the downlink data is less than or equal to a first threshold. If the data volume of the downlink data is less than or equal to the first threshold, it indicates that the data volume of the downlink data is small. Therefore, the downlink data can be sent by using the downlink small packet transmission procedure. If the data volume of the downlink data is greater than a first threshold, it indicates that the data volume of the downlink data is large, and it is not suitable to send the downlink data by using the downlink small packet transmission procedure. Therefore, it may be determined that the downlink data cannot be sent by using the downlink small packet transmission procedure. For the downlink data that cannot be sent by using the downlink small packet transmission procedure, the network device may trigger the UE to enter an RRC connected state, to receive the downlink data. The first threshold may be set by the network device, for example, set by the network device, or predefined in a protocol.

For another example, the first condition includes the load condition of the network device. The network device may determine a load status of the network device. Load of the network device includes, for example, a quantity of UEs served by the network device. If the load of the network device is greater than or equal to a first threshold value, it indicates that the load of the network device is heavy, and the network device may not support more UEs in entering the RRC connected state under the network device. In this case, the network device may determine that the downlink data can be sent by using the downlink small packet transmission procedure. If the load of the network device is less than a first threshold value, it indicates that the load of the network device is light, and the network device may determine that the downlink data cannot be sent by using the downlink small packet transmission procedure. For example, the network device may trigger the UE to enter the RRC connected state to receive the downlink data.

Alternatively, if the load of the network device is less than a first threshold value, the network device may further determine whether a data volume of the downlink data is less than or equal to a first threshold. If the data volume of the downlink data is less than or equal to the first threshold, the network device may determine that the downlink data can be sent by using the downlink small packet transmission procedure. If the data volume of the downlink data is greater than the first threshold, the network device may determine that the downlink data cannot be sent by using the downlink small packet transmission procedure. For example, the network device may trigger the UE to enter the RRC connected state to receive the downlink data, or the network device may give up sending the downlink data because the load of the network device is already heavy.

The downlink data whose transmission can be performed by using the downlink small packet transmission procedure is also referred to as downlink small data in this embodiment of this application.

That the network device determines that the downlink data can be sent by using the downlink small packet transmission procedure may be that a last serving base station (last serving gNB) determines that the downlink data can be sent by using the downlink small packet transmission procedure. Alternatively, that the network device determines that the downlink data can be sent by using the downlink small packet transmission procedure may be that a receiving base station (receiving gNB) determines that the downlink data can be sent by using the downlink small packet transmission procedure. The last serving base station may also be referred to as a new station, a new base station, or the like, and the receiving base station may also be referred to as an old station, an old base station, an anchor base station, or the like.

When the last serving gNB determines that the downlink data can be sent by using the downlink small packet transmission procedure, the last serving gNB may determine, based on the data volume of the downlink data received from the core network device in S201, whether the data can be sent by using the downlink small packet transmission procedure. When the receiving gNB determines that the downlink data can be sent by using the downlink small packet transmission procedure, the receiving gNB may determine, based on a data volume of downlink data sent by the last serving gNB to the receiving gNB, whether the data can be sent by using the downlink small packet transmission procedure. For example, before S202, the method further includes: The last serving gNB sends information about the data volume of the downlink data to the receiving gNB.

S203: The network device sends a paging (paging) message. Correspondingly, the UE receives the paging message from the network device. For example, at least one UE can receive the paging message. In FIG. 2, one UE is used as an example. The paging message may be a core network (core network, CN) paging message or a radio access network (radio access network, RAN) paging message.

The paging message may be used to page one or more UEs, so that the one or more UEs receive small data, or the one or more UEs receive downlink small data. For example, the paging message carries first indication information, to indicate that there is to-be-sent small data, indicate that there is to-be-sent downlink small data, indicate small packet transmission, or indicate downlink small packet transmission. The UE that receives the paging message can determine, based on the first indication information, that there is downlink small data. The first indication information is, for example, an MT-SDT indication, or may be other indication information.

S204: The UE initiates an RRC connection resume procedure used for small packet transmission. Optionally, before S204, the method may further include: The UE determines whether to initiate the RRC connection resume procedure used for small packet transmission. An example in which the UE determines to initiate the RRC connection resume procedure used for small packet transmission is used in S204. Optionally, the small packet transmission is, for example, downlink small packet transmission. Therefore, S204 may also be understood as that the UE initiates the RRC connection resume procedure used for the downlink small packet transmission. This is used as an example below.

Optionally, the UE may determine, based on a second condition, to initiate the RRC connection resume procedure used for the downlink small packet transmission. The second condition may include one or more of the following items: The paging message that carries the first indication information is received, first configuration information is received (or first configuration information is received from the network device), a second downlink small packet transmission configuration is received (or a second downlink small packet transmission configuration is received from the network device), current signal quality of the UE is greater than or equal to a signal quality threshold corresponding to downlink small packet transmission, or there is no to-be-processed or to-be-sent uplink data or no to-be-processed or to-be-sent uplink non-small data. Alternatively, these items may not be considered as being included in one condition (the second condition), but are several items that exist independently. Optionally, the second downlink small packet transmission configuration in this embodiment of this application may include a downlink small packet transmission configuration (which may be understood as a configuration used for the downlink small packet transmission), and/or include an uplink small packet transmission configuration (which may be understood as a configuration used for uplink small packet transmission, for example, sdt-Config in an uplink small packet transmission process). Therefore, the second downlink small packet transmission configuration may also be referred to as a second small packet transmission configuration.

The network device may configure, for the UE, a radio bearer (radio bearer, RB) on which transmission of small data may be performed, and the radio bearer may include a data radio bearer (data radio bearer, DRB) and/or a signaling radio bearer (signaling radio bearer, SRB). Transmission of data only on these RBs can be performed by using a small packet transmission process. These RBs may be referred to as small packet RBs or SDT RBs, and an RB other than these RBs may be referred to as a non-small packet RB or a non-SDT RB. When data arrives at the non-SDT RB, the UE cannot initiate the small packet transmission process. Therefore, uplink data on the non-SDT RB may be considered as uplink non-small data. In other words, downlink data on the non-SDT RB may be considered as downlink non-small data. In addition, in an uplink process, the UE may determine whether a data volume of to-be-sent uplink data on the SDT RB is less than or equal to a second threshold. If the data volume of the uplink data is less than or equal to the second threshold, it indicates that the data volume of the uplink data is small. Therefore, the uplink data can be sent by using an uplink small packet transmission procedure. In this case, the uplink data may be sent as uplink small data. If the data volume of the uplink data is greater than the second threshold, it indicates that the data volume of the uplink data is large, and it is not suitable to send the uplink data by using an uplink small packet transmission procedure. In this case, the uplink data is considered as uplink non-small data. In conclusion, the uplink non-small data may include uplink data on the non-SDT RB, and/or include the uplink data whose data volume is greater than the second threshold.

If a last item of the second condition is that "there is no to-be-processed or to-be-sent uplink data", it indicates that the UE initiates the RRC connection resume procedure used for the downlink small packet transmission only when there is no uplink data processing or transmission requirement. If the UE has uplink data being processed or to be sent in this case, the UE may not initiate the RRC connection resume procedure used for the downlink small packet transmission. For example, the UE may initiate an RRC connection resume process used for requesting to enter the RRC connected state, and enter the RRC connected state by using a normal random access procedure, so that the uplink data may be sent in the RRC connected state, and the downlink small data (which may also be referred to as the downlink data in this case) may also be received in the RRC connected state. The uplink data may include the uplink non-small data. For another example, the UE may initiate an RRC connection resume procedure used for SDT, and may send the uplink data in the RRC inactive state, or may receive the downlink small data in the RRC inactive state. The uplink data may include the uplink small data, and the RRC connection resume procedure used for the SDT may be an RRC connection resume procedure used for uplink SDT. If the UE has no uplink data being processed or to be sent in this case, the UE may initiate the RRC connection resume procedure used for the downlink small packet transmission. It may be considered that, if the last item is that "there is no to-be-processed or to-be-sent uplink data", a case in which only the downlink small data is included is classified as the downlink small packet transmission procedure, or the UE initiates the RRC connection resume procedure used for the downlink small packet transmission when only the downlink small data is included. The uplink non-small data may be understood as uplink data whose transmission cannot be performed by using the uplink small packet transmission procedure. For example, the UE may send the uplink non-small data in the RRC connected state.

Alternatively, if the last item of the second condition is that "there is no to-be-processed or to-be-sent uplink non-small data", it indicates that the UE initiates the RRC connection resume procedure used for the downlink small packet transmission only when there is no uplink non-small data processing or transmission requirement. If the UE has uplink non-small data being processed or to be sent in this case, the UE may not initiate the RRC connection resume procedure used for the downlink small packet transmission. For example, the UE may initiate an RRC connection resume process used for requesting to enter the RRC connected state, and enter the RRC connected state by using a normal random access procedure, so that the uplink non-small data may be sent in the RRC connected state, and the downlink small data (which may also be referred to as the downlink data in this case) may also be received in the RRC connected state. If the UE does not have uplink non-small data being processed or to be sent in this case, but the UE has uplink small data being processed or to be sent, the UE may initiate the RRC connection resume procedure used for the downlink small packet transmission. If the UE does not have uplink non-small data being processed or to be sent in this case, and the UE does not have uplink small data being processed or to be sent, the UE may also initiate the RRC connection resume procedure used for the downlink small packet transmission. It may be considered that, if the last item is that "there is no to-be-processed or to-be-sent uplink non-small data", a case in which the downlink small data and/or the uplink small data are/is included is classified as the downlink small packet transmission procedure, or the UE may initiate the RRC connection resume procedure used for the downlink small packet transmission when the downlink small data and/or the uplink small data are/is included.

For example, if one or more of the following items are met, the UE may initiate the RRC connection resume procedure used for the downlink small packet transmission: The paging message that carries the first indication information is received, the first configuration information is received from the network device, the second downlink small packet transmission configuration is received from the network device, there is no to-be-processed or to-be-sent uplink data or no to-be-processed or to-be-sent uplink non-small data, or the current signal quality of the UE is greater than or equal to the signal quality threshold corresponding to the downlink small packet transmission. If one or more of the items are not met, the UE may not initiate the RRC connection resume procedure used for the downlink small packet transmission.

Alternatively, if one or more of the following items are met, the UE may not initiate the RRC connection resume procedure used for the downlink small packet transmission: The paging message that carries the first indication information is not received, the first configuration information is not received from the network device, the second downlink small packet transmission configuration is not received from the network device, there is to-be-processed or to-be-sent uplink data or to-be-processed or to-be-sent uplink non-small data, or the current signal quality of the UE is less than the signal quality threshold corresponding to downlink small packet transmission. If one or more of the foregoing items are not met, the UE may initiate the RRC connection resume procedure used for the downlink small packet transmission.

The second downlink small packet transmission configuration is, for example, the configuration corresponding to the downlink small packet transmission. The second downlink small packet transmission configuration may be the same as or different from the configuration corresponding to the uplink small packet transmission. For example, the second downlink small packet transmission configuration is an MT-SDT configuration (mt-sdt-Config), and the SDT configuration may include a configuration of a radio bearer (radio bearer, RB) that supports the downlink small packet transmission, and/or include a configuration of a preconfigured resource that supports the downlink small packet transmission, and the like. In addition, another configuration may be further included. This is not specifically limited. The preconfigured resource is, for example, a configured grant (configured grant, CG)-SDT resource. Optionally, the second downlink small packet transmission configuration may be configured by the network device. For example, the network device sends an RRC message to the UE, where the RRC message may include second configuration information, and the second configuration information may indicate the second downlink small packet transmission configuration. The RRC message may be sent before S204. For example, the RRC message is an RRC release (release) message, and may be used to release the UE in the RRC connected state to an RRC non-connected state, or may be used to release the UE in the RRC inactive state back to the RRC inactive state. Alternatively, the RRC message may be another message, for example, another RRC message or a medium access control (media access control, MAC) control element (control element, CE). Alternatively, the second downlink small packet transmission configuration is an SDT configuration (sdt-Config), for example, a configuration for the uplink small packet transmission is reused. The SDT configuration includes a configuration of an RB that supports the small packet transmission, and/or a configuration of a preconfigured resource that supports the small packet transmission, and the like. In addition, another configuration may be further included. This is not specifically limited. The preconfigured resource is, for example, a CG-SDT resource. It may be understood as that the second downlink small packet transmission configuration is separately configured by the network device for the UE, and is a dedicated (dedicated) configuration of the UE.

The configuration of the RB that supports the downlink small packet transmission may indicate the RB that supports the downlink small packet transmission. In other words, which RBs support the downlink small packet transmission may be determined based on the configuration. For data on an RB that does not support the downlink small packet transmission, the UE may not need to initiate the downlink small packet transmission procedure. A small packet transmission procedure may include an uplink small packet transmission procedure and a downlink small packet transmission procedure. Therefore, there may be an RB that supports uplink small packet transmission, or there may be an RB that supports downlink small packet transmission. There may be an intersection or no intersection between the RB that supports the uplink small packet transmission and the RB that supports the downlink small packet transmission. If there is an intersection between the two parts of RBs, the two parts of RBs may be completely the same, or may be partially the same. Alternatively, the RB that supports the uplink small packet transmission and the RB that supports the downlink small packet transmission are not distinguished, in other words, an RB supporting SDT supports both the uplink small packet transmission and the downlink small packet transmission.

A configuration of a CG-SDT resource that supports the downlink small packet transmission may indicate the CG-SDT resource that can be used for the downlink small packet transmission procedure. For example, the CG-SDT resource is preconfigured by the network device, and may be used by the UE to send information to the network device in the small packet transmission procedure, for example, send the uplink small data or other information. In the downlink small packet transmission procedure, the UE also needs to send information to the network device. For example, when initiating the RRC resume procedure, the UE needs to send an RRC connection resume request message to the network device. Therefore, the UE may also use the CG-SDT resource. The small packet transmission procedure may include the uplink small packet transmission procedure and the downlink small packet transmission procedure. Therefore, there may be a CG-SDT resource used for the uplink small packet transmission, or there may be a CG-SDT resource that supports the downlink small packet transmission. There may be an intersection or no intersection between the CG-SDT resource that supports the uplink small packet transmission and the CG-SDT resource that supports the downlink small packet transmission. If there is an intersection between the two parts of CG-SDT resources, the two parts of CG-SDT resources may be completely the same, or may be partially the same. Optionally, the second downlink small packet transmission configuration may be configured by the network device. For example, the network device may send second indication information, where the second indication information indicates that the UE may initiate MT-SDT by using the CG-SDT resource. For example, the second downlink small packet transmission configuration includes the second indication information. For example, the second indication information is configured for each UE, or the second indication information corresponds to each set of CG-SDT resources. In other words, the second indication information indicates whether the UE can initiate MT-SDT by using the CG-SDT resource.

The first configuration information may indicate a first downlink small packet transmission configuration. For example, the first configuration information includes information about a first timer, and/or includes a signal quality threshold corresponding to the small packet transmission, or may further include other configuration information.

The first timer may be configured to monitor the small packet transmission procedure, for example, monitor the downlink small packet transmission procedure. For example, the UE may start the first timer when initiating the RRC connection resume procedure used for the small packet transmission, and may stop the first timer when receiving an RRC response message (a response message corresponding to the RRC connection resumption) from the network device. If the first timer expires, the UE may enter an RRC idle state.

Optionally, the signal quality threshold that is corresponding to the small packet transmission and that is included in the first configuration information is, for example, the signal quality threshold corresponding to the downlink small packet transmission. Optionally, an RSRP threshold in the uplink small packet transmission procedure may be reused as the signal quality threshold. For example, the signal quality threshold is the same as an SDT RSRP threshold included in SDT common configuration information to be described below; or the signal quality threshold may be different from the RSRP threshold in the uplink small packet transmission procedure. A parameter corresponding to the signal quality threshold corresponding to the downlink small packet transmission may include one or more of reference signal received power (reference signal received power, RSRP), reference signal received quality (reference signal received quality, RSRQ), or a signal to interference plus noise ratio (signal to interference plus noise ratio, SINR). For example, if the parameter corresponding to the signal quality threshold corresponding to the downlink small packet transmission is RSRP, the threshold is an RSRP threshold. For another example, if the parameter corresponding to the signal quality threshold corresponding to the downlink small packet transmission is RSRQ, the threshold is an RSRQ threshold. For example, if the current signal quality of the UE is greater than or equal to the signal quality threshold corresponding to the downlink small packet transmission, it indicates that the current signal quality of the UE is good, and the UE can receive downlink small data without entering the RRC connected state. Therefore, in this case, the UE may initiate the RRC connection resume procedure used for the downlink small packet transmission.

Optionally, the first configuration information may be configured by the network device, and the method may further include S205: The network device sends the first configuration information to the UE, and correspondingly, the UE receives the first configuration information from the network device. For example, S205 is performed before S204. The first configuration information may be sent in a broadcast manner. For example, the network device sends the first configuration information by using a broadcast message. The broadcast message is, for example, a system message, for example, a system resource block 1 (system resource block, SIB1), or may be another system message. It may be understood as that the first downlink small packet transmission configuration is not separately configured by the network device for the UE, but is a common (common) configuration, and may be used by a plurality of UEs.

Alternatively, the network device may not send the first configuration information, and the UE does not need to receive the first configuration information. For example, the UE may determine, without reference to the first configuration information, whether to initiate the RRC connection resume procedure used for the downlink small packet transmission. Alternatively, the first configuration information may not be configured by the network device, but the UE may obtain the first configuration information in another manner. For example, the first configuration information may be predefined in a protocol. In this case, the UE may still determine, with reference to the first configuration information, whether to initiate the RRC connection resume procedure used for the downlink small packet transmission.

Optionally, the first configuration information may be dedicated to the downlink small packet transmission procedure, and does not relate to the uplink small packet transmission procedure. The following provides descriptions.

The uplink small packet transmission procedure is initiated by the UE. Therefore, the UE may determine whether to initiate the uplink small packet transmission procedure. For example, the UE may determine whether to initiate the RRC connection resume procedure used for the uplink small packet transmission. If determining that the RRC connection resume procedure used for the uplink small packet transmission can be initiated, the UE may initiate the RRC connection resume procedure used for the uplink small packet transmission. The UE may determine, based on a third condition, whether to initiate the RRC connection resume procedure used for the uplink small packet transmission. The third condition may include at least one of the following items: a condition 1, a condition 2, a condition 3, a condition 4, or a condition 5.

The condition 1 is that an upper layer of the UE requests to resume an RRC connection. For example, the upper layer is a non-access stratum (non-access stratum, NAS).

The condition 2 is that the system message SIB1 received by the UE from a base station includes the SDT common configuration (sdt-ConfigCommon) information.

The condition 3 is that the SDT configuration is configured for the UE. For example, the SDT configuration includes the configuration of the RB and the configuration of the CG-SDT resource.

The condition 4 is that all to-be-processed or to-be-sent uplink data is mapped to an RB configured for SDT.

The condition 5 is that a lower layer of the UE indicates that a condition for initiating SDT is met, and the lower layer is, for example, a MAC layer. For example, the condition for initiating the SDT includes: A size of an uplink data packet is less than or equal to a small data volume threshold, current RSRP of the UE is greater than or equal to an RSRP threshold corresponding to small data, and there is an available CG-SDT resource or an available random access (random access, RA)-SDT resource used for sending the uplink small data.

Based on the condition 2, the UE may determine whether a current base station or a current cell supports the uplink small packet transmission. For example, if the SIB1 includes the SDT common configuration, the UE determines that the current base station or the current cell supports the uplink small packet transmission. If the SIB1 does not include the SDT common configuration, the UE determines that the current base station or the current cell does not support the uplink small packet transmission. The common SDT configuration information in the condition 2 may include at least one of the following items: an SDT RSRP threshold (sdt-RSRP-Threshold), an SDT logical channel scheduling request delay timer (sdt-LogicalChannelSR-DelayTimer), an SDT data volume threshold (sdt-DataVolumeThreshold), or an SDT failure detection timer (t319a).

It can be learned from the foregoing that, in the uplink small packet transmission procedure, the SDT common configuration information may be used by the UE to determine whether to initiate the RRC connection resume procedure used for the uplink small packet transmission. However, in this embodiment of this application, the UE may alternatively determine, based on corresponding configuration information (for example, the first configuration information), whether to initiate the RRC connection resume procedure used for the downlink small packet transmission. If the SDT common configuration information of the uplink small packet transmission procedure is reused, in other words, the first configuration information and the SDT common configuration information are same information, or content of the first configuration information may be included in the SDT common configuration information, in addition to the first configuration information, the SDT common configuration information additionally includes at least information about an SDT data volume threshold corresponding only to the uplink small packet transmission procedure because the SDT data volume threshold is a mandatory option in the SDT common configuration information. However, the downlink small packet transmission procedure may not need the SDT data volume threshold, but the SDT common configuration information needs to include the SDT data volume threshold, and the network device needs to support the uplink small packet transmission procedure. In other words, if the SDT common configuration information of the uplink small packet transmission procedure is reused, the network device needs to support both the uplink small packet transmission and the downlink small packet transmission, and cannot support only the uplink small packet transmission or the downlink small packet transmission. This imposes a high requirement on the network device.

In addition, even if the network device can support the uplink small packet transmission and the downlink small packet transmission, in some scenarios, a condition of the uplink small packet transmission or the downlink small packet transmission may not be met. In other words, although the network device can support the two types of transmission, it does not necessarily indicate that the two types of transmission can be performed at any time. For example, in some cases, if the network device considers that the downlink small packet transmission procedure can be performed, the network device may broadcast the SDT common configuration information, and the SDT common configuration information is used by the UE to determine whether to initiate RRC connection resumption used for the downlink small packet transmission. In other words, in this case, the SDT common configuration information is not used to determine whether to initiate the RRC connection resume procedure used for the uplink small packet transmission, or does not indicate that the current network device or the current cell supports the uplink small packet transmission. However, for the UE that is to initiate the RRC connection resume procedure used for the uplink small packet transmission, if it is determined that the SIB1 includes the SDT common configuration information, it may be determined that the current network device or the current cell supports the uplink small packet transmission procedure, and the UE may continue to perform another determining condition. When determining the condition 5, the UE may find that there is currently no RA-SDT resource or CG-SDT resource that can be used for the uplink small packet transmission. In this case, the UE can determine that a condition for initiating the RRC connection resume procedure used for the uplink small packet transmission is not met. However, actually, the UE could have determined, when determining the condition 2, that the condition for initiating the RRC connection resume procedure used for the uplink small packet transmission is not met. It can be learned that, if the SDT common configuration information corresponding to the uplink small packet transmission procedure is reused in the downlink small packet transmission procedure, the UE may perform excessive redundant determining steps. Consequently, efficiency of the UE is reduced and power consumption of the UE is increased.

In consideration of the foregoing problems, in this embodiment of this application, the first configuration information is additionally set for the downlink small packet transmission procedure. The first configuration information may be dedicated to the downlink small packet transmission procedure, and does not relate to the uplink small packet transmission procedure. The first configuration information and the SDT common configuration information may be different information. For example, the first configuration information and the SDT common configuration information may be included in different messages, or although the first configuration information and the SDT common configuration information are included in a same message (for example, the SIB1), the first configuration information and the SDT common configuration information may be included in different information elements (information elements, IEs). For example, the UE that is to initiate the uplink small packet transmission may determine, based on the SDT common configuration information, whether the condition for initiating the RRC connection resume procedure used for the uplink small packet transmission is met, and the UE that is to initiate downlink small packet transmission may determine, based on the first configuration information, whether a condition for initiating the RRC connection resume procedure used for the downlink small packet transmission is met. The two determining processes do not affect each other, so that a determining result of the UE is more accurate, and determining efficiency of the UE is also improved. In addition, because the first configuration information is configured for the downlink small packet transmission procedure, the network device can separately support the uplink small packet transmission or the downlink small packet transmission. In other words, support statuses of the network device for different small packet transmission are decoupled, to reduce a capability requirement on the network device.

The UE needs to initiate the RRC connection resume procedure used for the downlink small packet transmission. In an optional manner, the UE may send an RRC request message to the network device. For example, the RRC request message is the RRC connection resume request message or an RRC resume request (RRC resume request) message. The following uses the RRC resume request message as an example for description. Optionally, if the UE obtains the first configuration information, and the first configuration information includes the information about the first timer, the UE may start the first timer when the UE completes sending the RRC resume request message, or after the UE sends the RRC resume request message.

Optionally, the UE may send the RRC resume request message by using the RA-SDT resource or the CG-SDT resource, or the UE may send the RRC resume request message by using the normal random access procedure. A random access resource corresponding to the random access procedure is not a random access resource configured by the base station for the small packet transmission.

For example, when the UE receives the paging message in S203, regardless of whether the UE has uplink small data that needs to be sent, the UE may send the RRC resume request message by using a third message (Msg3) or a message A (MsgA) of RA-SDT. For example, the UE may send a random access preamble (preamble) of the RA-SDT to the network device. It may be understood as that the preamble corresponds to the RA-SDT. After receiving the preamble, the network device may schedule, for the UE, a resource used for sending the Msg3. For example, the network device sends a random access response (random access response, RAR) message to the UE, and the RAR message may be used to schedule, for the UE, the resource used for sending the Msg3. The UE may send the RRC resume request message to the network device by using the resource scheduled by using the RAR message. If the UE has the uplink small data that needs to be sent, the UE may send the uplink small data together by using the resource scheduled by using the RAR message. Alternatively, when the UE receives the paging message in S203, the UE sends the RRC resume request message by using a third message (Msg3) or a message A (MsgA) of RA-SDT only when the UE has uplink small data that needs to be transmitted.

Alternatively, when the UE receives the paging message in S203, regardless of whether the UE has uplink small data that needs to be sent, the UE may send the RRC resume request message by using the CG-SDT resource when a CG-SDT condition is met. If the UE has the uplink small data that needs to be sent, the UE may send the uplink small data together by using the CG-SDT resource. Alternatively, when the UE receives the paging message in S203, the UE sends the RRC resume request message through CG-SDT when a CG-SDT condition is met only when the UE has uplink small data that needs to be transmitted. For example, the CG-SDT resource is a CG-SDT resource specially configured by the base station for the downlink small packet transmission, or the CG-SDT resource is a CG-SDT resource used in the uplink small packet transmission.

Alternatively, when the UE receives the paging message in S203, if the UE does not have uplink small data that needs to be sent, the UE may send the RRC resume request message by using the normal random access procedure. For example, the UE may send a normal preamble to the network device. It may be understood as that the preamble does not correspond to the uplink small packet transmission procedure. After receiving the preamble, the network device may schedule, for the UE, the resource used for sending the Msg3. For example, the network device sends a RAR message to the UE, and the RAR message may be used to schedule, for the UE, the resource used for sending the Msg3. The UE may send the RRC resume request message to the network device by using the resource scheduled by using the RAR message. Optionally, the RRC resume request message may further carry a cause (cause) value, and the cause value may indicate that a cause of RRC resumption currently initiated by the UE is downlink small data. If the UE uses the preamble corresponding to the RA-SDT, to ensure transmission of the uplink small data of the UE, the network device usually schedules a large quantity of resources for the UE. For example, the resources scheduled by the network device for the UE are more than resources scheduled based on the normal preamble. Therefore, if the UE does not have the uplink small data that needs to be sent, the UE uses the normal preamble, so that the resources scheduled by the network device can be reduced, to reduce resource overheads.

Optionally, the method further includes S206: The network device sends first downlink small data to the UE. Correspondingly, the UE receives the first downlink small data from the network device.

After receiving the RRC connection resume request message, the network device may send the to-be-sent downlink small data to the UE. For example, the network device may send the first downlink small data to the UE in a dynamic scheduling manner. For example, the network device may send downlink control information (downlink control information, DCI) to the UE to schedule a downlink resource, and the network device may send the first downlink small data to the UE by using the downlink resource. The first downlink small data may be sent at a time, or may undergo a plurality of sending processes. If the first downlink small data is sent after a plurality of sending processes, before each sending process, the network device may schedule, for the UE, a downlink resource used by current sending.

For another example, the network device may alternatively send the first downlink small data to the UE in a semi-persistent scheduling (semi-persistent scheduling, semi-persistent scheduling) manner. For example, the network device may send higher layer signaling to the UE, where the higher layer signaling may be used to schedule a periodic downlink resource, and the UE may receive the downlink small data on the periodic downlink resource scheduled by using the higher layer signaling. The higher layer signaling is, for example, an RRC message or a MAC CE.

Optionally, the method further includes S207: The network device sends the RRC response message to the UE. Correspondingly, the UE receives the RRC response message from the network device. Optionally, the RRC response message is, for example, an RRC release (RRC release) message.

After the first downlink small data is sent, the network device may send the RRC response message to the UE, to end the current downlink small packet transmission procedure. After receiving the RRC response message, the UE may stop receiving the downlink small data. For example, the UE may continue remaining in a current RRC non-connected state.

Optionally, if the UE starts the first timer in S204 and the first timer expires, the UE may enter the RRC idle state. Alternatively, when the UE receives the RRC response message, or after the UE receives the RRC response message, if the first timer is in a running state, the UE may stop the first timer. That the first timer expires may be understood as that the UE does not receive the RRC response message from the network device when the first timer expires. It can be learned that the first timer may be configured to monitor the downlink small packet transmission procedure. For example, the first timer may be the timer t319a, or may be a timer newly defined in this embodiment of this application. If the first timer is the timer newly defined in this embodiment of this application, timing duration of the first timer may be the same as or different from timing duration of the timer t319a.

In this embodiment of this application, if the UE receives a paging message indicating the downlink small data, the UE may determine, based on a corresponding condition, to initiate the RRC connection resume procedure used for the downlink small packet transmission. Alternatively, it may be understood as that the UE may determine, based on a corresponding condition, whether to initiate the RRC connection resume procedure used for the downlink small packet transmission. For example, if one or more items proposed in this embodiment of this application are met, the UE may initiate the RRC connection resume procedure used for the downlink small packet transmission. If one or more items are not met, the UE may not initiate the RRC connection resume procedure used for the downlink small packet transmission. In the determining process, a probability that a UE that does not meet the condition initiates an RRC connection resume procedure used for a downlink small packet transmission procedure can be reduced, and power consumption of this type of UE can be reduced. In addition, a UE that determines to initiate an RRC connection resume procedure used for downlink small packet transmission is enabled as much as possible to be a device that meets the initiation condition, so that a success rate of receiving downlink small data by the UE can be improved. A UE that initiates uplink small packet transmission and a UE that initiates downlink small packet transmission may determine, based on different conditions, whether the corresponding small packet transmission can be initiated, to reduce determining steps that need to be performed by the UEs, simplify implementation complexity of the UEs, and reduce power consumption of the UEs. In addition, the first configuration information used for the downlink small packet transmission procedure is introduced in this embodiment of this application, so that the network device can separately support the uplink small packet transmission or the downlink small packet transmission, and does not need to support both the uplink small packet transmission and the downlink small packet transmission, to reduce the capability requirement on the network device.

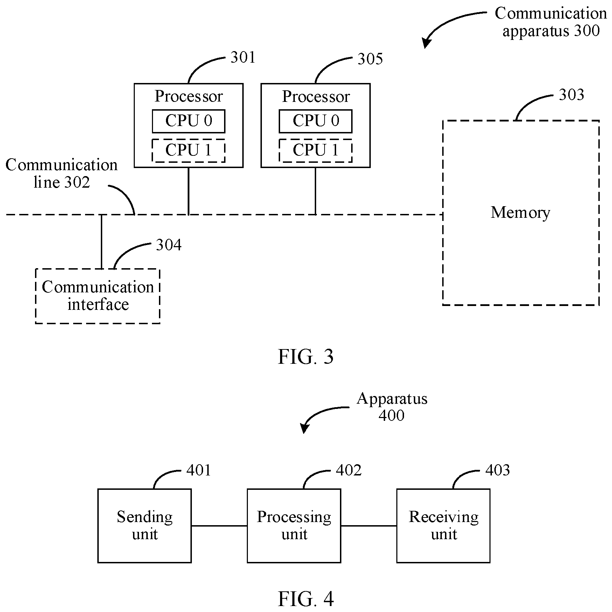

FIG. 3 is a diagram of a structure of a communication apparatus according to an embodiment of this application. The communication apparatus 300 may be the UE in the embodiment shown in FIG. 2 or a circuit system of the UE, and is configured to implement the method corresponding to the UE in the foregoing method embodiments. Alternatively, the communication apparatus 300 may be a circuit system of the network device in the embodiment shown in FIG. 2, and is configured to implement the method corresponding to the network device in the foregoing method embodiments. For a specific function, refer to the descriptions in the foregoing method embodiments. For example, a circuit system is a chip system.

The communication apparatus 300 includes at least one processor 301. The processor 301 may be configured to perform internal processing of the apparatus, to implement a specific control processing function. Optionally, the processor 301 includes instructions. Optionally, the processor 301 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 300 includes one or more memories 303, configured to store instructions. Optionally, the memory 303 may further store data. The processor and the memory may be separately disposed, or may be integrated together.

Optionally, the communication apparatus 300 includes a communication line 302 and at least one communication interface 304. Because the memory 303, the communication line 302, and the communication interface 304 are all optional, the memory 303, the communication line 302, and the communication interface 304 are all represented by dashed lines in FIG. 3.

Optionally, the communication apparatus 300 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 300 by using the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 301 may include a general-purpose central processing unit (central processing unit, CPU), a microprocessor, an application-specific integrated circuit (application-specific integrated circuit, ASIC), or one or more integrated circuits configured to control program execution of the solutions in this application.

The communication line 302 may include a path for transmitting information between the foregoing components.

The communication interface 304 is any apparatus like a transceiver, and is configured to communicate with another device or a communication network, for example, an ethernet, a radio access network (radio access network, RAN), a wireless local area network (wireless local area network, WLAN), or a wired access network.

The memory 303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of instructions or a data structure and that can be accessed by a computer. However, the memory 303 is not limited thereto. The memory 303 may exist independently, and is connected to the processor 301 through the communication line 302. Alternatively, the memory 303 may be integrated with the processor 301.

The memory 303 is configured to store computer-executable instructions for performing the solutions in this application, and the processor 301 controls execution. The processor 301 is configured to execute the computer-executable instructions stored in the memory 303, to implement the communication method provided in the foregoing embodiments of this application.

Optionally, the computer-executable instructions in this embodiment of this application may also be referred to as application program code. This is not specifically limited in this embodiment of this application.

During specific implementation, in an embodiment, the processor 301 may include one or more CPUs, for example, a CPU 0 and a CPU 1 in FIG. 3.

During specific implementation, in an embodiment, the communication apparatus 300 may include a plurality of processors, for example, the processor 301 and a processor 305 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 3 is a chip, for example, a chip of the UE or a chip of the network device, the chip includes the processor 301 (which may further include the processor 305), the communication line 302, the memory 303, and the communication interface 304. Specifically, the communication interface 304 may be an input interface, a pin, a circuit, or the like. The memory 303 may be a register, a cache, or the like. The processor 301 and the processor 305 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. For example, when the functional modules are obtained through division based on corresponding functions, FIG. 4 is a diagram of an apparatus. The apparatus 400 may be the UE or the network device in the foregoing method embodiments, or a chip in the UE or a chip in the network device. The apparatus 400 includes a sending unit 401, a processing unit 402, and a receiving unit 403.

It should be understood that the apparatus 400 may be configured to implement the steps performed by the UE or the network device in the method in embodiments of this application. For related features, refer to the foregoing embodiments. Details are not described herein again.

Optionally, functions/implementation processes of the sending unit 401, the receiving unit 403, and the processing unit 402 in FIG. 4 may be implemented by the processor 301 in FIG. 3 by invoking the computer-executable instructions stored in the memory 303. Alternatively, a function/implementation process of the processing unit 402 in FIG. 4 may be implemented by the processor 301 in FIG. 3 by invoking the computer-executable instructions stored in the memory 303. Functions/implementation processes of the sending unit 401 and the receiving unit 403 in FIG. 4 may be implemented through the communication interface 304 in FIG. 3.

Optionally, when the apparatus 400 is a chip or a circuit, the functions/implementation processes of the sending unit 401 and the receiving unit 403 may alternatively be implemented by a pin, a circuit, or the like.

This application further provides a computer-readable storage medium. The computer-readable storage medium stores a computer program or instructions. When the computer program or the instructions are run, the method performed by the UE or the network device in the foregoing method embodiments is implemented. In this way, the functions in the foregoing embodiments can be implemented in a form of a software functional unit and sold or used as an independent product. Based on such an understanding, the technical solutions of this application essentially, or a contributing part, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the UE or the network device in any one of the foregoing method embodiments.

An embodiment of this application further provides a processing apparatus, including a processor and an interface. The processor is configured to perform the method performed by the UE or the network device in any one of the foregoing method embodiments.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedures or functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by designing a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the method or algorithms described in embodiments of this application may be directly embedded into hardware, a software unit executed by the processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or a storage medium of any other form in the art. For example, the storage medium may connect to the processor, so that the processor may read information from the storage medium, and may write information to the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different components in the terminal device.

These computer program instructions may alternatively be loaded onto the computer or another programmable data processing device, so that a series of operation steps are performed on the computer or the another programmable device to generate computer-implemented processing, and instructions executed on the computer or the another programmable device provide steps for implementing a specific function in one or more procedures in the flowchart and/or one or more blocks in the block diagram.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. It is clear that, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to a terminal device, wherein the method comprises:
receiving a paging message from a network device, wherein the paging message is used to page the terminal device to receive downlink small data; and
when one or more of the following items are met, initiating a radio resource control RRC connection resume procedure used for small packet transmission:
the paging message that carries first indication information is received, wherein the first indication information indicates downlink small packet transmission;
first configuration information is received from the network device, wherein the first configuration information indicates a first downlink small packet transmission configuration;
a second downlink small packet transmission configuration is received from the network device; or
there is no to-be-processed or to-be-sent uplink data or no to-be-processed or to-be-sent uplink non-small data.

2. The method according to claim 1, wherein the initiating an RRC connection resume procedure used for small packet transmission comprises:
initiating an RRC connection resume procedure used for the downlink small packet transmission.

3. The method according to claim 1 or 2, wherein the first configuration information is comprised in a system message.

4. The method according to any one of claims 1 to 3, wherein the first configuration information and small data transmission SDT common configuration information are different information.

5. The method according to any one of claims 1 to 4, wherein the first configuration information comprises information about a first timer and/or a signal quality threshold corresponding to the small packet transmission, wherein the first timer is configured to monitor a small packet transmission process.

6. The method according to claim 5, wherein
the first timer is configured to monitor a downlink small packet transmission process; and
the signal quality threshold corresponding to the small packet transmission is a signal quality threshold corresponding to the downlink small packet transmission.

7. The method according to claim 5 or 6, wherein
the initiating an RRC connection resume procedure used for small packet transmission comprises: sending an RRC resume request message to the network device, and starting the first timer; and
the method further comprises:
when an RRC response message is received from the network device, if the first timer is in a running state, stopping the first timer; or
if the first timer expires, entering an RRC idle state.

8. The method according to claim 7, wherein after the initiating an RRC connection resume procedure used for small packet transmission, the method further comprises:
receiving first downlink small data from the network device.

9. The method according to any one of claims 1 to 8, wherein the second downlink small packet transmission configuration comprises a configuration of a radio bearer that supports the downlink small packet transmission, and/or a configuration of a preconfigured resource that supports the downlink small packet transmission.

10. A communication method, applied to an access network device, wherein the method comprises:
sending first configuration information, wherein the first configuration information indicates a first downlink small packet transmission configuration, the first configuration information and SDT common configuration information are different information, and the SDT common configuration is used for uplink small packet transmission.

11. The method according to claim 10, wherein the first configuration information is comprised in a system message.

12. The method according to claim 10 or 11, wherein the first configuration information comprises information about a first timer and/or a signal quality threshold corresponding to small packet transmission, wherein the first timer is configured to monitor a small packet transmission process.

13. The method according to claim 12, wherein
the first timer is configured to monitor a downlink small packet transmission process, and
the signal quality threshold corresponding to the small packet transmission is a signal quality threshold corresponding to downlink small packet transmission.

14. The method according to any one of claims 10 to 13, wherein the method further comprises:
sending a paging message, wherein the paging message is used to page a terminal device to receive downlink small data;
receiving an RRC resume request message from the terminal device; and
sending first downlink small data to the terminal device.

15. A communication apparatus, comprising a processor and a memory, wherein the memory is coupled to the processor, and the processor is configured to perform the method according to any one of claims 1 to 9.

16. A communication apparatus, comprising a processor and a memory, wherein the memory is coupled to the processor, and the processor is configured to perform the method according to any one of claims 10 to 14.

17. A computer-readable storage medium, wherein the computer-readable storage medium is configured to store a computer program, and when the computer program runs on a computer, the computer is enabled to perform the method according to any one of claims 1 to 9, or the computer is enabled to perform the method according to any one of claims 10 to 14.

18. A chip system, wherein the chip system comprises:
a processor and an interface, wherein the processor is configured to invoke instructions from the interface and run the instructions, and when executing the instructions, the processor implements the method according to any one of claims 1 to 9, or implements the method according to any one of claims 10 to 14.

19. A computer program product, wherein the computer program product comprises a computer program, and when the computer program runs on a computer, the computer is enabled to perform the method according to any one of claims 1 to 9, or the computer is enabled to perform the method according to any one of claims 10 to 14.
